# EUROPÄISCHE PATENTSCHRIFT

(11) **EP 1 133 139 B1**
(45) Veröffentlichungstag und Bekanntmachung des Hinweises auf die Patenterteilung: **12.05.2010**
(21) Anmeldenummer: 01105050.7
(22) Anmeldetag: 01.03.2001
(51) Int. Cl.: H04M 3/42

(54) **Verfahren und Anordnung zur Zuordnung von Ressourcen in einem Kommunikationssystem**
Method and system for resource allocation in a communication system
Méthode et système pour l' allocation de ressources dans un système de communication

(30) Priorität: 10.03.2000 DE 10011655
(43) Veröffentlichungstag der Anmeldung: 12.09.2001
(73) Patentinhaber: SIEMENS AKTIENGESELLSCHAFT, 80333 München (DE)
(72) Erfinder: Aufderheide, Bernd, 49324 Melle (DE)
(74) Vertreter: Fritzsche, Thomas

(56) Entgegenhaltungen:
- EP-A- 0 398 037
- EP-A- 0 872 981
- WO-A-98/13993
- US-A- 5 867 495

## Beschreibung

Verfahren und Anordnung zur Zuordnung von Ressourcen in einem Kommunikationssystem.

Die Erfindung bezieht sich auf eine Anordnung und ein Verfahren, womit in einem Kommunikationssystem mehreren konkurrierenden Ressourcenverbrauchern mit vorzugsweise unterschiedlichen Zuordnungsprioritäten, Ressourcen zugewiesen werden. Dies geschieht ohne daß hierzu ein deterministisches Betriebssystem, wie ein Echtzeitbetriebssystem, oder aber ein definiertes Kommunikationsprotokoll in Form eines Handshake-Protokolles erforderlich ist. Insbesondere werden dabei Dienste einer Vermittlungseinrichtung über eine CTI-Schnittstelle Leistungsmerkmalen oder Anwendungen in einer dezentralen Einrichtung des Kommunikationssystems zugeordnet.

Zwischen Vermittlungseinrichtungen und externen Steuerrechnern sind unterschiedliche Schnittstellen bekannt. Auf einer CTI-Verbindung (Computer Telefonie Integration) können beispielsweise das CSTA-, TAPI- oder JTAPI-Protokoll eingesetzt werden.

Dabei handelt es sich um CTI-Protokolle unterschiedlicher Hersteller. Im einzelnen bedeuten die Abkürzungen:
**CSTA:** Computer Supported Telephony Application. Ein von der ECMA (European Computer Manufacturers Association) spezifiziertes Protokoll.
**TSAPI:** Telephony Services Application Programming Interface eine Adaption von CSTA der Firma Novell.
**TAPI**: Telephony Application Programming Interface eine Schnittstelle der Firma Microsoft.
**JTAPI**: Java Telephony Application Programming Interface. Ein von der ECTF (Enterprise Computer Telephony Forum) spezifiziertes Protokoll.

Derzeit werden im Fall von CTI-Anwendungen Aktionen durch Ereignismeldungen seitens der Vermittlungseinrichtung angestoßen. Die Ereignismeldungen werden gemultiplext und den betreffenden Anwendungen zur Verfügung gestellt. Diese Anwendungen reagieren entweder mit Diensten auf die Ereignismeldungen oder aber verhalten sich passiv. Ein Konflikt tritt dann auf, falls mehrere miteinander konkurrierende Anwendungen auf eine Ereignismeldung unterschiedlich reagieren wollen. Bei mehreren parallel ablaufenden Anwendungen, mit betriebssystembedingten unterschiedlichen Antwortzeiten treten dabei hauptsächlich folgende zwei Probleme auf:
1.) Es ist nicht sicher, daß die erste Anwendung, welche die Ereignismeldung x erhält, auch die erste Anwendung ist, die darauf antwortet.
2.) Es ist nicht vorher bestimmbar, wann alle Anwendungen ihre Aktionen auf die Ereignismeldung x abgeschlossen haben, da über die CTI-Schnittstelle standardmäßig kein Quittungsmechanismus vorgesehen ist.

Mit den derzeit bekannten Protokollen CSTA, TAPI oder JTAPI wurden diese Probleme bisher nicht vermieden. In der Regel erfolgte die Zuordnung von Ressourcen und Ressourcenverbrauchern deterministisch. Im Wesentlichen kommen für eine solche deterministische Zuordnung drei Lösungsvarianten in Betracht.

Zum einen kann durch die Verwendung eines Echtzeitbetriebssystems gewährleistet werden, daß zuerst versendete Ereignismeldungen auch zuerst beantwortet werden. Eine priorisierbare Verarbeitung durch die Ressourcenanforderer kann dabei sichergestellt werden, indem höherpriorigen Ressourcenanforderern die Ereignismeldungen zuerst zugestellt werden. Ein Ressourcenanforderer mit niedrigster Priorität erhält eine entsprechende Ereignismeldung in diesem Fall zuletzt.

Ebenfalls läßt sich eine priorisierbare Zuordnung durch einen Handshaking-Mechanismus gewährleisten. Hierbei wird davon ausgegangen, daß jede empfangene Ereignismeldung von einem entsprechenden potentiellen Ressourcenanforderer quittiert werden muß. Diese Quittung kann entweder durch Abgabe einer Ressourcenanforderung oder durch Abgabe einer einfachen Empfangsbestätigung erfolgen. Bei einer derartigen Lösung sammelt eine zentrale Zuordnungseinrichtung die Quittungen. Durch Zugriff auf eine für die potentiellen Ressourcenanforderer vorliegende Prioritätenliste wird dann eine jeweilige Ressource demjenigen Ressourcenanforderer zur Verfügung gestellt, welcher die höchste Priorität aufweist.

Ebenfalls besteht die Möglichkeit eine feste Zeitspanne zu vereinbaren, in welcher alle potentiellen Ressourcenanforderer auf eine Ereignismeldung zu antworten haben. Nach Ablauf dieser Zeitspanne kann dann eine zentrale Ressourcenzuordnungseinrichtung davon ausgehen, daß alle Ressourcenanforderungen von den einzelnen Ressourcenanforderern eingegangen sein müssen. Anhand einer Prioritätenliste wird die Ressource dann demjenigen Ressourcenanforderer zugeordnet, der die höchste Priorität aufweist. Derartige Ressourcenanforderer können beispielsweise Anwendungen oder Leistungsmerkmale sein.

Die beschriebenen Alternativen weisen jedoch unterschiedliche Nachteile auf. Eine zeitliche sequentielle Abarbeitung von Ereignismeldungen und Ressourcenanforderungen über Prozeßgrenzen hinweg gewährleistet kein Standardbetriebssystem, weswegen eine proprietäre Lösung gewählt werden müßte. Ebenfalls eine proprietäre Lösung müßte eingesetzt werden, wenn ein Handshaking-Mechanismus die Priorisierung sicherstellen sollte, weil in keiner CTI-Spezifikation die Forderung besteht, daß empfangene Ereignismeldungen quittiert werden müssen. Die Einhaltung einer definierten Zeitspanne als Wartezeit erzeugt unnötig große Verzögerungen und ist zudem fehlerträchtig.

Aus der europäischen Patentanmeldung EP-A-872 981 Helbig et al. "Übertragungssystem mit mehreren Netzelementen" ist ein Übertragungssystem mit mehreren in hierarchischer, baumförmiger Struktur angeordneten Netzelementen bekannt. Dabei weisen die einzelnen Netzelemente des Ressourcenpfades jeweils eine Datenbank auf, in der Routing-Informationen darüber gespeichert sind, in welcher Verzweigung einer nächst niedrigeren Hierarchiestufe der Ressourcenpfad verläuft, so dass die Entscheidung über die Weiterleitung einer Anforderung oder eine Information anhand der gespeicherten Routing-Informationen über die Hierarchiestufen der Verzweigungen erfolgen kann.

Die der Erfindung zugrunde liegende Aufgabe besteht darin, ein Verfahren und eine Anordnung einzugeben, womit eine priorisierbare Zuordnung von Ressourcen möglich ist, die durch konkurrierende Ressourcenanforderer angefordert werden, welche die oben beschriebenen Nachteile nicht aufweisen. Diese Aufgabe wird für das Verfahren gemäß den Merkmalen des Patentanspruches 1 und für die Anordnung gemäß den Merkmalen des Patentanspruches 7 gelöst. Weiterbildungen der Erfindung ergeben sich aus den abhängigen Ansprüchen.

Das erfindungsgemäße Verfahren bietet besonders vorteilhaft die Sicherheit eines Handshake-Verfahrens, ohne die Nachteile der zahlreichen Meldungen eines Handshake-Protokolles aufzuweisen, weil nach einer Ressourcenanforderung lediglich diejenigen potentiellen Ressourcenanforderer abgefragt werden müssen, die ein höhere Priorität haben, als derjenige Ressourcenanforderer der aktuell seine Anforderung abgegeben hat. Hierdurch wird also, abhängig von der Anzahl der vergebenen Prioritäten und der Anzahl der potentiellen Ressourcenanforderungen eine entsprechende Anzahl von Quittungsmeldungen eingespart.

Besonders vorteilhaft wird eine Ressourcenanforderung bei einer Weiterbildung des beschriebenen Verfahrens direkt an eine Zuordnungseinrichtung versandt, weil diese den Vergleich der Prioritäten, die Versendung der zu quittierenden Abfragen und die Auswertung der Antworten übernehmen kann, wobei die CTI-Verbindung zur Vermittlungseinrichtung lediglich mit dem Steuerbefehl für die Ressourcenzuordnung belastet wird, der von der Zuordnungseinrichtung in Folge ihrer Auswertung ermittelt wurde.

Besonders vorteilhaft wird bei einer Weiterbildung des beschriebenen Verfahrens von der Zuordnungseinrichtung der Meldungsverkehr zu den einzelnen potentiellen Ressourcenanforderungen gesteuert und werden Ereignismeldungen, welche über die CTI-Verbindung von der Vermittlungseinrichtung eintreffen, vervielfältigt und an die einzelnen potentiellen Ressourcenanforderer versandt. Auf diese Weise wird ein definierter und ressourcenschonender Nachrichtenverkehr sichergestellt, ohne daß dazu zusätzliche Einrichtungen erforderlich wären.

Vorteilhaft werden von den potentiellen Ressourcenanforderern die Ereignisnachrichten nacheinander, bspw. realisiert durch eine Nachrichtenwarteschlange, abgearbeitet, weil auf diese Weise im Systemverbund sichergestellt wird, daß im Zusammenhang mit einer zu quittierenden Antwort eine Ressourcenanforderung eines höherpriorigen potentiellen Ressourcenanforderers vor der Quittung auf die zu quittierende Anfrage an die Zuordnungseinrichtung abgegeben wird.

Besonders vorteilhaft werden bei einer Weiterbildung des beschriebenen Verfahrens über eine CTI-Verbindung die Ressourcen eines Vermittlungssystems Leistungsmerkmalen zugeordnet, weil sich auf diese Weise einfach ein Leistungsmerkmalserver für gängige Vermittlungseinrichtungen bereitstellen läßt, der eine priorisierte Verarbeitung von Leistungsmerkmalen zuläßt.

Besonders vorteilhaft ist eine Anordnung, die Mittel zur Ausführung des erfindungsgemäßen Verfahrens aufweist, weil auf diese Art und Weise eine Vermittlungseinrichtung mit einem Leistungsmerkmalserver bereitgestellt wird, der eine schnelle und optimale Verarbeitung von Ressourcenanforderungen zuläßt, ohne daß ein Echtzeitbetriebssystem oder ein kompletter Handshake-Mechanismus zu ihrer Steuerung erforderlich wäre.

Besonders vorteilhaft ist bei einer Weiterbildung der beschriebenen Anordnung eine dezentrale Einrichtung an eine Vermittlungseinrichtung über eine CTI-Verbindung angeschlossen, wobei in der dezentralen Einrichtung Leistungsmerkmalprozesse ablaufen, die Ressourcen der Vermittlungseinrichtung benötigen. Eine derartige Weiterbildung ermöglicht eine priorisierte Leistungsmerkmalsteuerung in einer Vermittlungseinrichtung, ohne ein erhöhtes Meldungsaufkommen über die CTI-Verbindung zur Folge zu haben.

Besonders vorteilhaft weisen einzelne Ressourcenanforderer in einer Weiterbildung der beschriebenen Anordnung Speicher für die Abspeicherung von Ereignismeldungen auf, die eine sukzessive Abarbeitung dieser Meldungen durch die entsprechenden Prozesse erlauben. Auf diese Weise wird sichergestellt, daß potentielle Ressourcenanforderer nach Erhalt einer zu quittierenden Anfrage seitens der Zuordnungseinrichtung eine Ressourcenanforderung abgeben, bevor sie die entsprechende Meldung quittieren.

Im Folgenden werden Ausführungsbeispiele der Erfindung anhand von Figuren weiter erläutert.
- Figur 1: zeigt einen Meldungsablauf nach dem Stand der Technik.
- Figuren 2 bis 4: zeigen Meldungsabläufe nach einem erfindungsgemäßen Verfahren, bei dem Ressourcen durch Ressourcenanforderer mit unterschiedlicher Zuordnungsrangstufe angefordert werden.
- Figur 5: zeigt ein Beispiel einer Anordnung.

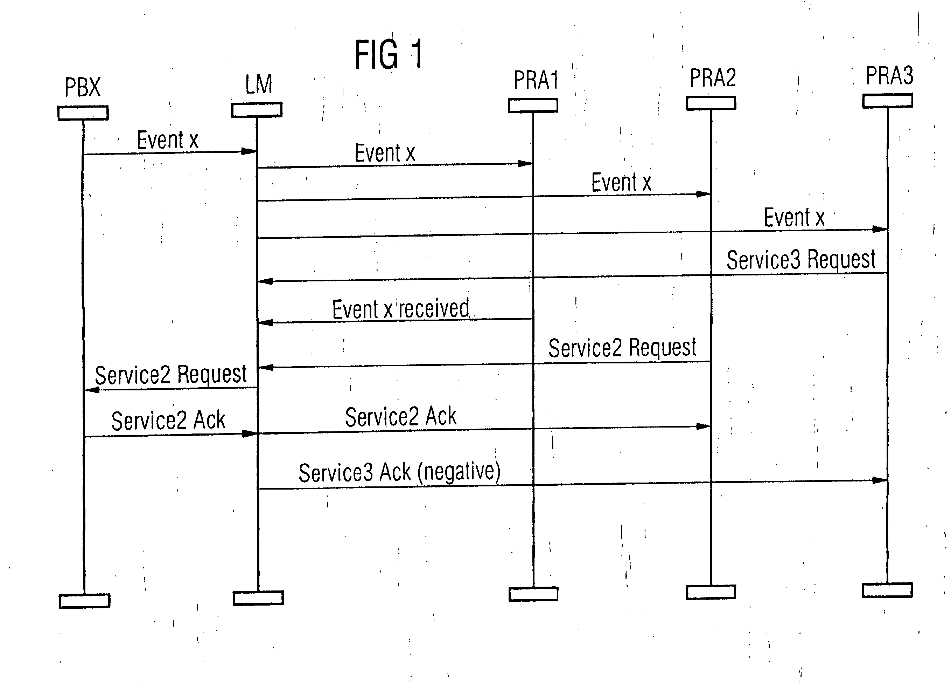

Figur 1 zeigt in schematischer Darstellung eine Vermittlungseinrichtung PBX, eine Zuordnungseinrichtung LM und einzelne potentielle Ressourcenanforderer PRA1 bis PRA3. In der Zuordnungseinrichtung LM sind beispielsweise eine oder mehrere Prioritätslisten vorhanden, die Zuordnungsränge, d.h. Prioritäten der einzelnen potentiellen Ressourcenanforderer angeben, damit Nachrichten an höherpriorige potentielle Ressourcenanforderer zuerst versandt werden können. Beispielsweise sind die Vermittlungseinrichtung PBX und die Zuordnungseinrichtung LM über eine CTI-Schnittstelle und eine entsprechende Verbindungsleitung miteinander verbunden.

In diesem Beispiel wird ein Meldungsablauf nach dem Handshaking-Verfahren gezeigt. Ein solches Konzept entspricht dem Stand der Technik, ist jedoch mit derzeitig verfügbaren CTI-Protokollen nicht möglich.

Wie erkannt werden kann, gibt die Vermittlungseinrichtung PBX zunächst eine Ereignismeldung Event x an die Ressourcenzuordnungseinrichtung LM ab. Diese versendet diese Meldung gemäß den vergebenen Prioritäten für die potentiellen Ressourcenanforderer zunächst an PRA1, dann an PRA2 und zuletzt an PRA3, weil PRA3 die niedrigste Priorität hat. Als Reaktion auf den Erhalt dieser Ereignismeldung gibt PRA3 eine Zuordnungsanforderung Service3 Request an die Ressourcenzuordnungseinrichtung LM ab. Im Anschluß quittiert PRA1 den Erhalt der Ereignismeldung mit Event x received. Der Erhalt dieser Quittungsmeldung wird in der Ressourcenzuordnungseinrichtung LM dahingehend interpretiert, daß PRA1 im Augenblick keine Ressourcen benötigt. Im Anschluß an die soeben beschriebene Quittungsmeldung ergeht eine Ressourcenanforderung Service2 Request von der Einrichtung PRA2. Nachdem PRA1 mit der höchsten Priorität keine Ressourcen benötigt und PRA2 mit der zweithöchsten Priorität Ressourcen anfordert, wird die Ressourcenanforderung von PRA2 und nicht die von PRA3 durch die Ressourcenzuordnungseinrichtung an die Vermittlungseinrichtung weitergegeben, woraufhin die Vermittlungseinrichtung PBX die Zuordnung mit Service2 Ack der Zuordnungseinrichtung bestätigt, welche diese Meldung an den potentiellen Ressourcenanforderer PRA2 weitergibt. In der Folge wird die Anforderung von PRA3 mit Service3 Ack (negative) abschlägig beschieden.

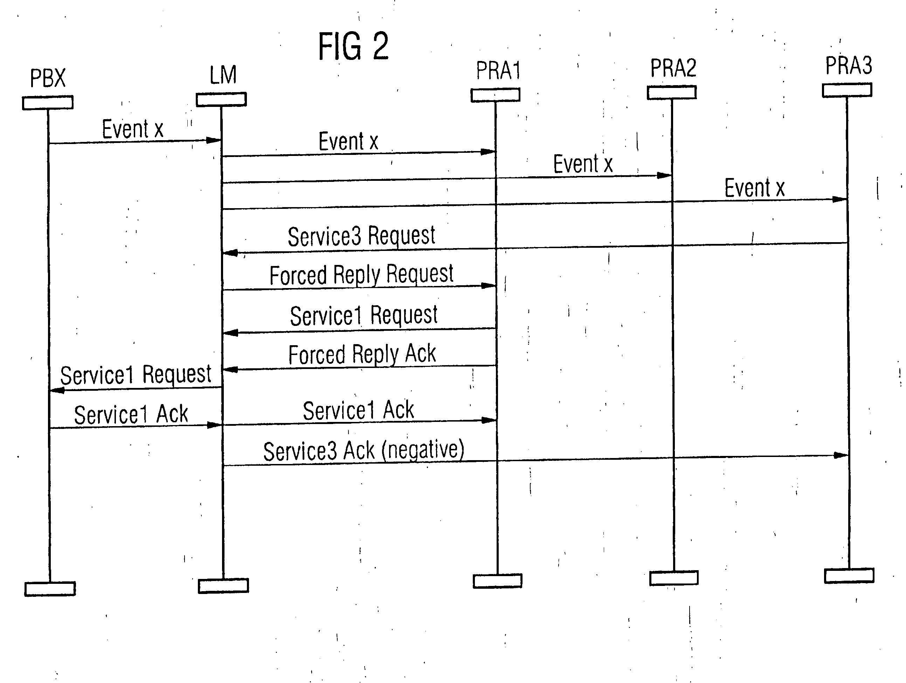

Figur 2 zeigt ein Beispiel einer erfindungsgemäßen Ressourcenzuordnung und des damit verbundenen Meldungsverkehrs. Die Bezeichnungen der Meldungen und der einzelnen Einrichtungen verstehen sich analog zu Figur 1. Als Reaktion auf die Ereignismeldung Event x fordert PRA3 mit Service3 Request über die Zuordnungseinrichtung LM Ressourcen der Vermittlungseinrichtung PBX an. Darauf ergeht in Auswertung einer der Zuordnungseinrichtung LM zugänglichen Prioritätenliste, welche die Rangfolge von PRA1 bis PRA3 hinsichtlich der Zuordnung von Ressourcen der Vermittlungseinrichtung enthält, zunächst an PRA1 mit der höchsten Zuordnungspriorität eine zu quittierende Anfrage Forced Reply Request. Der potentielle Ressourcenanforderer PRA1 quittiert Event x mit einer Ressourcenanforderung Servicel Request und die Anfrage Forced Reply Request mit der Quittung Forced Reply Ack. Das Nachrichtenpaar Forced Reply Request und Forced Reply Ack dient der Ressourcenzuordnungseinrichtung LM dazu, festzustellen ob PRA1 eine Ressourcenanforderung Servicel Request auf den Event x geschickt hat. Dies ist nicht die einzig mögliche Reaktion. Da PRA1 alle Nachrichten nacheinander abarbeitet, muß die Nachricht Servicel Request zwangsweise vor der Nachricht Forced Reply Ack eintreffen. LM kann somit folgende Schlußfolgerungen ableiten.
- Trifft ein Servicel Request vor Forced Reply Ack ein, so ist PRA1 an einer Ressourcenzuteilung interessiert.
- Trifft kein Servicel Request vor Forced Reply Ack ein, so ist PRA1 nicht an einer Ressourcenzuteilung interessiert.
Die Ressource kann also nach Bedarf PRA2 oder PRA3 zugeordnet werden.
Die Ressourcenzuordnungseinrichtung LM leitet die Ressourcenzuordnung Servicel Request an die Vermittlungseinrichtung weiter, welche den Erhalt dieser Meldung mit Servicel Ack der Ressourcenzuordnungseinrichtung LM bestätigt, woraufhin diese wiederum eine Meldung Servicel Ack an PRA1 abgibt. Weil PRA1 eine höhere Zuordnungspriorität von Ressourcen als PRA3 aufweist, wird von der Ressourcenzuordnungseinrichtung LM in einem weiteren Schritt eine Meldung Service3 Ack (negative) an PRA3 abgegeben. Deutlich kann in diesem Meldungsablauf erkannt werden, daß im Zusammenhang mit einem derartigen Meldungsverkehr Meldungswarteschlangen innerhalb der potentiellen Ressourcenanforderer PRA1 bis PRA3 vorteilhaft sind.
Durch die zu quittierende Anfrage (Anfrage: Forced Reply Request, Quittung: Forced Reply Ack) wird sichergestellt:
- Trifft ein Servicel Request vor Forced Reply Ack ein, so ist PRA1 an einer Ressourcenzuteilung interessiert.
- Trifft kein Servicel Request vor Forced Reply Ack ein, so ist PRA1 nicht an einer Ressourcenzuteilung interessiert.
   Die Ressource kann also nach Bedarf PRA2 oder PRA3 zugeordnet werden.

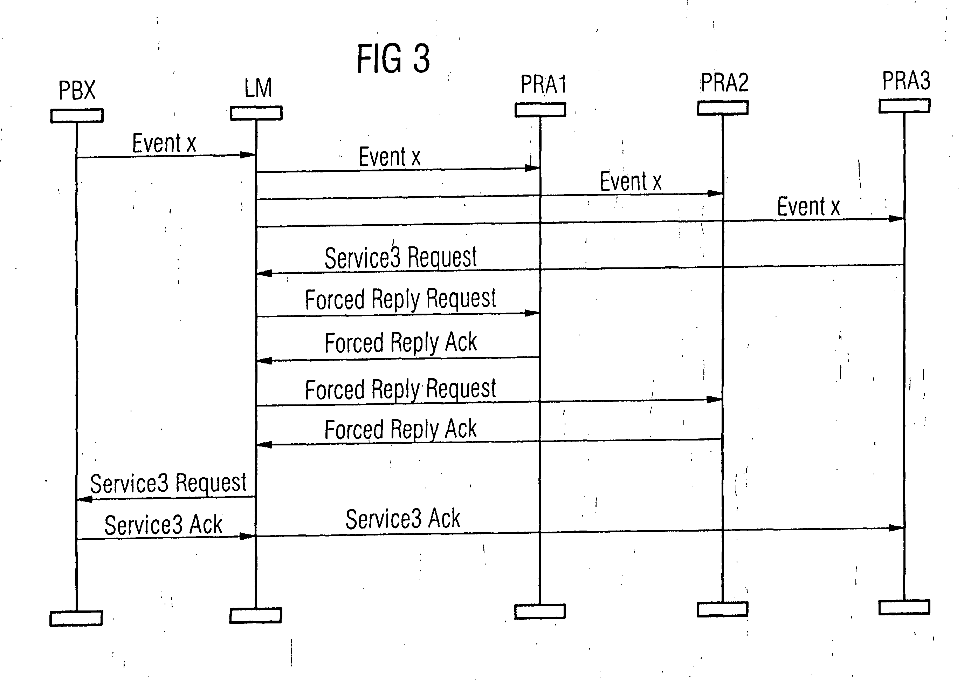

Figur 3 zeigt analog zur Figur 2 den Meldungsverkehr bei einem erfindungsgemäßen Verfahren für den Fall, daß der potentielle Ressourcenanforderer PRA1 keine Ressourcen benötigt, wobei in diesem Fall der potentielle Ressourcenanforderer PRA2 ebenfalls keine Ressourcen benötigt. Hier werden seitens der höherpriorigen potentiellen Ressourcenanforderer PRA1 und PRA2 die Quittungsmeldungen an die Ressourcenzuordnungseinrichtung LM abgegeben. Es erfolgt keine Ressourcenanforderung. In diesem Beispiel kann die Ressourcenanforderung des niedrigpriorigen Ressourcenanforderers PRA3 durch die Zuordnung von Ressourcen der Vermittlungseinrichtung erfüllt werden. Allgemein ist zu beachten, daß auf eine Nachricht Event x mit ServiceX Request geantwortet wird, falls Interesse an einer Ressourcenzuordnung besteht. Auf die Anfrage Forced Reply Request ergeht immer die Quittung Forced Reply Ack.

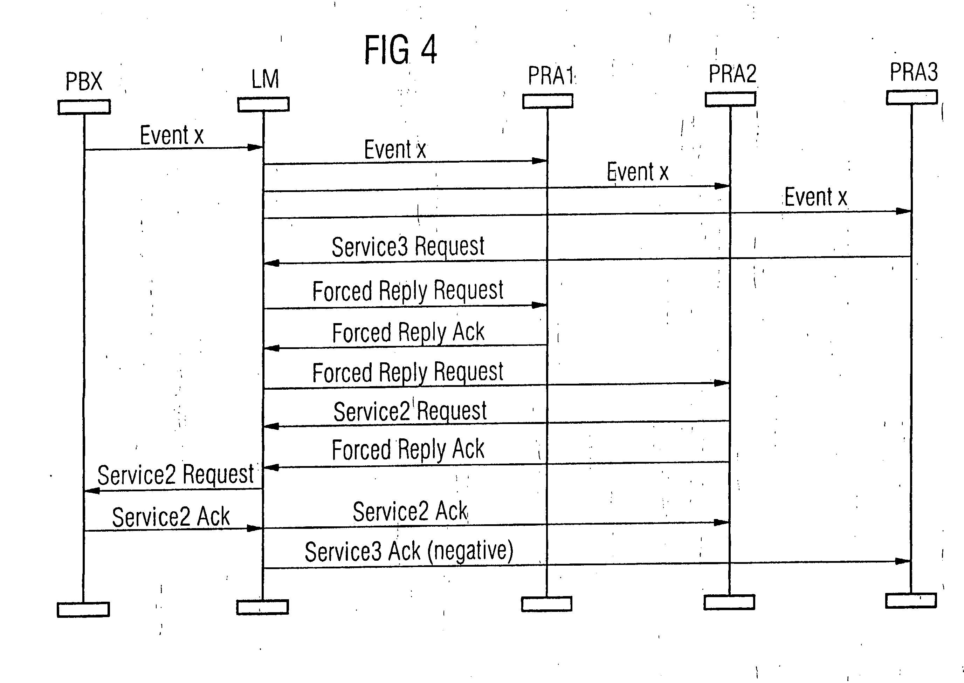

Figur 4 zeigt einen Meldungsverkehr, bei dem der potentielle Ressourcenanforderer PRA2 als Reaktion auf die Ereignismeldung Event x seitens der Ressourcenzuordnungseinrichtung LM mit einer Ressourcenzuordnungsanfrage Service2 Request antwortet. Aus diesem Grund wird ebenfalls eine zuerst erfolgte Ressourcenanforderung seitens PRA3 negativ beschieden.

Hier wird ein Meldungsverkehr gezeigt, bei dem der PRA3, der potentielle Ressourcenanforderer mit der niedrigsten Priorität mit Service3 Request als erstes seinen Bedarf bei LM anmeldet.

LM hat jedoch die Ereignismeldung auch an PRA1 und PRA2 verschickt. Diese haben sich bisher, bspw. aus Laufzeitgründen nicht gemeldet. LM verschickt daher Forced Reply Request zunächst an PRA1 mit der höchsten Priorität und erhält nur die Quittung Forced Reply Ack von Pral als Antwort. Daraus leitet LM ab, daß PRA1 als Reaktion auf Event x keinen Service angefordert hat. LM verschickt daher Forced Reply Request an PRA2 mit der zweithöchsten Priorität und erhält Service2 Request von Pra2 als Reaktion auf Event x als Antwort. LM erhält die Quittung Forced Reply Ack von Pra2. Daraus leitet LM ab, daß PRA2 als Reaktion auf Event x eine Ressource angefordert hat. LM leitet die Ressourcenanforderung Service2 Request von PRA2 an PBX weiter. LM erhält eine positive Quittung von der Vermittlungseinrichtung PBX und reicht diese an PRA2 weiter. LM quittiert dann die Ressourcenanforderung Service3 Request von PRA3 negativ mit Service3 Ack (negative), da die Ressource PRA2 zugeteilt wurde.

Im Prinzip ist es gleichgültig, welche zu quittierenden Anfragen seitens der Ressourcenzuordnungseinrichtung LM an die potentiellen Ressourcenanforderer für den Fall einer vorliegenden Ressourcenanforderung versendet werden. Wichtig ist bezüglich dieser Nachrichten, daß dafür ein standardkonformes Anfrage- und Antwort-Paar ausgewählt wird. Für den Fall einer CSTA-Anwendung wäre ein solches Anfrage-/Antwort-Paar beispielsweise "System Status". Vorteilhaft werden Meldungsüberprüfungen und Meldungsversand sowie der Zugriff auf Zuordnungsranglisten durch geläufige Mittel in Vermittlungseinrichtungen, bzw. in Leistungsmerkmalservern oder in Kombinationen davon bereitgestellt.

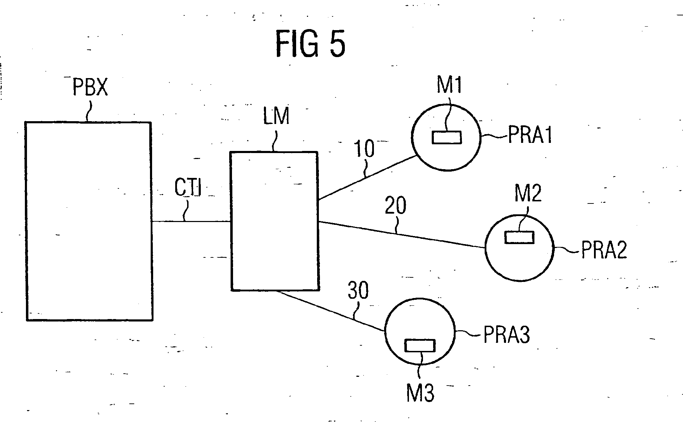

Wie Figur 5 zeigt, besteht eine Anordnung mit priorisierbare Ressourcenzuordnung aus einer Vermittlungseinrichtung PBX. Diese ist über ein CTI-Schnittstelle CTI an eine Ressorcenzuordnungseinrichtung LM angeschlossen. Mit dieser Ressorcenzuordnungseinrichtung LM kommunizieren potentielle Ressourcenanforderer PRA1, PRA2 und PRA3 über Leitungen 10, 20 und 30.

Hier ist zwar gezeigt, daß die potentiellen Ressourcenanforderer als Einzelrechner separat angeordnet und mittels eines Netzwerks an LM angeschlossen sind, aber sie können sich in anderen Ausgestaltungen ebenfalls im selben Rechner wie LM befinden und dort als unterschiedliche Prozesse abgearbeitet werden. PRA1 bis PRA3 müssen gewährleisten, daß die Nachrichten nacheinander bearbeitet werden. Realisiert durch Meldungswarteschlangen, für die in den potentiellen Ressourcenanforderern PRA1, PRA2 und PRA3 Warteschlangenspeicher M1, M2 und M3 vorhanden sind. In der gezeigten Anordnung findet der obenstehend erläuterte Meldungsaustausch statt.

## Patentansprüche

1. Verfahren zur Zuordnung von Ressourcen in einem Kommunikationssystem mit folgenden Merkmalen:
a) Für den Fall, daß eine erste Ressourcenanforderung (Service2 Request) von einem zweiten potentiellen Ressourcenanforderer (PRA1, PRA2, PRA3) an eine Zuordnungseinrichtung (LM) zur-Zuordnung einer Ressource erfolgt, wird durch Zugriff auf eine Zuordnungsranginformation überprüft, ob ein erster potentieller Ressourcenanforderer (PRA1, PRA2, PRA3) mit höherem Zuordnungsrang existiert;
b) Falls ein erster potentieller Ressourcenanforderer (PRA1, PRA2, PRA3) mit höherem Zuordnungsrang existiert, so wird an diesen eine zu qui-ttierende erste Abfrage (Forced Reply Request) versandt und nur für den Fall, daß der erste potentielle Ressourcenanforderer (PRA1,- PRA2, PRA3) die erste Abfrage (Forced Reply Request) quittiert ohne zuvor eine Ressource angefordert zu haben, wird dem zweiten potentiellen Ressourcenanforderer (PRA1, PRA2, PRA3) die Ressource zugeordnet.

2. Verfahren nach Anspruch 1,
bei dem vor der Zuordnung mindestens eine erste Ereignisnachricht (Event x) von der Zuordnungseinrichtung an mindestens einen ersten und einen zweiten potentiellen Ressourcenanforderer (PRA1, PRA2, PRA3) mit unterschiedlichem Zuordnungsrang versandt wird;

3. Verfahren nach einem der Ansprüche 1 bis 2,
bei dem eine Ressourcenanforderung (Service Request) an die Zuordnungseinrichtung (LM) gerichtet wird.

4. Verfahren nach einem der Ansprüche 1 bis 3,
bei dem die Zuordnungseinrichtung (LM)_die erste Ereignisnachricht (Event x) an alle potentiellen Ressourcenanforderer (PRA1, PRA2, PRA3) versendet.

5. Verfahren nach einem der vorangehenden Ansprüche,
bei dem die potentiellen Ressourcenanforderer (PRA1, PRA2, PRA3) Ereignisnachrichten (Event x) nacheinander auswerten.

6. Verfahren nach einem der vorangehenden Ansprüche,
bei dem Ressourcen einer Vermittlungseinrichtung (PBX) zugeordnet werden, wobei die Ereignisnachrichten (Event x) über eine CTI-Verbindung mit einer dezentralen Zuordnungseinrichtung (LM) ausgetauscht werden, die den Ressourcen Anwendungen und/oder Leistungsmerkmalen zuordnet.

7. Anordnung zur Zuordnung von Ressourcen in einem Kommunikationssystem mit folgenden Merkmalen:
a) Es ist eine Zuordnungseinrichtung (LM) vorhanden, zur Zuordnung von Ressourcen zu potentiellen Ressourcenanforderern (PRA);
b) es sind Mittel vorhanden zum Versenden von Nachrichten an potentielle Ressourcenanforderer (PRA);
c) es sind erste Mittel vorhanden zum Zugriff auf eine Zuordnungsinformation von mindestens zwei potentiellen Ressourcenanforderern (PRA);
d) es sind zweite Mittel vorhanden zur Überprüfung des Zuordnungsrangs einer potentiellen Ressourcenanforderung, die für den Fall, daß eine Ressourcenanforderung eines potentiellen Ressourcenanforderers (PRA) mit höherem Zuordnungsrang existiert, den Versand einer zu quittierenden Anfrage an mindestens einen solchen potentiellen Ressourcenanforderer (PRA) veranlassen;
e) es sind dritte Mittel vorhanden zur Überprüfung, ob vor eintreffen der Quittung auf die Nachricht von dem potentiellen Ressourcenanforderer (PRA) eine Ressourcenanforderung von diesem potentiellen Ressourcenanforderer (PRA) erfolgt und nur falls dies nicht der Fall ist, eine Zuordnung von angeforderten Ressourcen an einen potentiellen Ressourcenanforde rer (PRA) mit niedrigerem Zuordnungsrang durch die-Zuordnungseinrichtung veranlassen.

8. Anordnung nach Anspruch 7,
a) bei der eine Vermittlungseinrichtung (PBX) vorhanden ist, welche mit der Zuordnungseinrichtung (LM) über eine Verbindung mit CTI-Schnittstelle verbunden ist, über die Ereignisnachrichten in Form von Events übertragen werden und bei der potentielle Ressourcenanforderer (PRA) in Form von Anwendungen und/oder Leistungsmerkmalen vorhanden sind.

9. Anordnung nach Anspruch 8,
bei der die Zuordnungseinrichtung (LM) als Leistungsmerkmals-Server einer Vermittlungseinrichtung (PBX)- ausgeführt ist.

10. Anordnung nach Anspruch 8 oder 9,
bei der in den potentiellen Ressourcenanforderern (PRA) Verarbeitungsmittel zur sukzessiven Verarbeitung der Nachrichten vorhanden sind.

## Claims

1. Method of assigning resources in a communications system with the following features:
a) if a first service request is made by a second potential resource requester (PRA1, PRA2, PRA3) to an assignment device (LM) for assigning a resource, it is then verified, through access to assignment priority (rank) information, whether a first potential resource requester (PRA1, PRA2, PRA3) with a higher priority exists;
b) if a first potential resource requester (PRA1, PRA2, PRA3) with higher assignment priority exists, then a forced reply request is sent thereto and only if the first potential resource requester (PRA1, PRA2, PRA3) acknowledges the first forced reply request without beforehand having requested a resource, is the resource then assigned to the second potential resource requester (PRA1, PRA2, PRA3).

2. Method according to claim 1, in which prior to the step of assigning, at least one first event report (Event x) is sent by the assignment device to at least a first and a second potential resource requester (PRA1, PRA2, PRA3) with different assignment priority.

3. Method according to one of claims 1 or 2, in which a service request is sent to the assignment device (LM).

4. Method according to one of claims I to 3, in which the assignment device (LM) sends the first event report (Event x) to all potential resource requesters (PRA1, PRA2, PRA3).

5. Method according to one of the preceding claims in which the potential resource requesters (PRA1, PRA2, PRA3) evaluate event reports (Event x) one after the other.

6. Method according to one of the preceding claims in which resources in a communications system (PBX) are assigned, wherein the event reports (Event x) are exchanged via a CTI connection with a decentralised assignment device (LM) which assigns applications and/or service features to the resources.

7. System for assigning resources in a communication system with the following features:
a) There is an assignment device (LM) for assigning the resources to potential resource requesters (PRA);
b) There are means for sending reports to the potential resource requesters (PRA);
c) There are first means for accessing an assignment information item of at least two potential resource requesters (PRA);
d) There are second means for checking an assignment priority of a potential resource requester wherein, if a resource request of a potential resource requester (PRA) having a higher assignment priority exists, said means cause an inquiry to be acknowledged to be sent to at least one potential resource requester (PRA) having the higher assignment rank;
e) There are third means for checking whether, prior to arrival of the acknowledgement of the report from the potential resource requester (PRA), a service request is made by this potential resource requester (PRA) and, only if this is not the case, said means cause an assignment of requested resources by the assignment device to a potential resource requester (PRA) having a lower assignment priority.

8. System according to claim 7 a), in which a communications system (PBX) is present, which is connected to the assignment device (LM) via a connection with a CTI interface, via which event reports are transmitted in the form of events, and in which the potential resource requesters (PRA) are present in the form of applications and/or service features.

9. System according to claim 8, in which the assignment device (LM) is realised as a service feature server of a communications system (PBX).

10. System according to claim 8 or 9, in which processing means for successively processing the reports are present in the potential resource requesters (PRA).

## Revendications

1. Procédé pour l'allocation de ressources dans un système de communication ayant les caractéristiques suivantes :
a) dans le cas où une première demande de ressource (Service2 Request) est faite par un deuxième demandeur potentiel de ressources (PRA1, PRA2, PRA3) à un dispositif d'allocation (LM) afin d'allouer une ressource, il est vérifié au moyen d'un accès à une information de priorité d'allocation s'il existe un premier demandeur potentiel de ressources (PRA1, PRA2, PRA3) ayant une priorité d'allocation plus élevée ;
b) dans le cas où il existe un premier demandeur potentiel de ressources (PRA1, PRA2, PRA3) ayant une priorité d'allocation plus élevée, il est envoyé à celui-ci une première requête à acquitter (Forced Reply Request) et uniquement dans le cas où le premier demandeur potentiel de ressources (PRA1, PRA2, PRA3) acquitte la première requête (Forced Reply Request) sans avoir demandé auparavant une ressource, la ressource est allouée au deuxième demandeur potentiel de ressources (PRA1, PRA2, PRA3).

2. Procédé selon la revendication 1,
dans lequel, avant l'allocation, au moins un premier message d'événement (Event x) est envoyé par le dispositif d'allocation à au moins un premier et un deuxième demandeur potentiel de ressources (PRA1, PRA2, PRA3) ayant des priorités d'allocation différentes

3. Procédé selon l'une des revendications 1 à 2,
dans lequel une demande de ressources (Service Request) est adressée au dispositif d'allocation (LM).

4. Procédé selon l'une des revendications 1 à 3, dans lequel le dispositif d'allocation (LM) envoie le premier message d'événement (Event x) à tous les demandeurs potentiels de ressources (PRA1, PRA2, PRA3).

5. Procédé selon l'une quelconque des revendications précédentes,
dans lequel les demandeurs potentiels de ressources (PRA1, PRA2, PRA3) évaluent des messages d'événement (Event x) les uns après les autres.

6. Procédé selon l'une quelconque des revendications précédentes,
dans lequel des ressources sont allouées à un dispositif de commutation (PSX), les messages d'événement (Event x) étant échangés par le biais d'une liaison CTI (couplage de la téléphonie et de l'informatique) avec un dispositif d'allocation décentralisé (LM) qui attribuent aux ressources des applications et/ou des caractéristiques fonctionnelles.

7. Dispositif d'allocation de ressources dans un système de communication ayant les caractéristiques suivantes :
a) il est présent un dispositif d'allocation (LM) destiné à allouer des ressources à des demandeurs potentiels de ressources (PRA) ;
b) il est présent un moyen pour envoyer des messages à des demandeurs potentiels de ressources (PRA) ;
c) il est présent un premier moyen destiné à accéder à une information d'allocation d'au moins deux demandeurs potentiels de ressources (PRA) ;
d) il est présent un deuxième moyen destiné à vérifier le priorité d'allocation d'une demande potentielle de ressource, lequel moyen, dans le cas où il existe une demande de ressource d'un demandeur potentiel de ressources (PRA) ayant une priorité d'allocation plus élevée, se charge de l'envoi d'une requête à acquitter à au moins un tel demandeur potentiel de ressources (PRA) ;
e) il est présent un troisième moyen destiné à vérifier si, avant l'arrivée de l'acquittement du message par le demandeur potentiel de ressources (PRA), une demande de ressource est faite par ce demandeur potentiel de ressources (PRA), et uniquement si ce n'est pas le cas, ledit moyen se charge que le dispositif d'allocation alloue les ressources demandées à un demandeur potentiel de ressources (PRA) ayant une priorité d'allocation plus bas.

8. Dispositif selon la revendication 7,
a) dans lequel il est présent un dispositif de commutation (PBX) qui est relié au dispositif d'allocation (LM) par le biais d'une liaison avec une interface CTI (couplage de la téléphonie et de l'informatique) par le biais de laquelle les messages d'événement sont transmis sous forme d'événements et dans lequel des demandeurs potentiel de ressources (PRA) sont présents sous la forme d'applications et/ou de caractéristiques fonctionnelles.

9. Dispositif selon la revendication 8,
dans lequel le dispositif d'allocation (LM) est réalisé sous forme d'un serveur de caractéristiques fonctionnelles d'un dispositif de commutation (PBX).

10. Dispositif selon la revendication 8 ou 9,
dans lequel des moyens de traitement destinés au traitement successif des messages sont présents dans les demandeurs potentiels de ressources (PRA).
